Europäisches Patentamt

European Patent Office

Office européen des brevets

(19)

(11) Numéro de publication : **0 012 650**
**B1**

(12) **FASCICULE DE BREVET EUROPÉEN**

(45) Date de publication du fascicule du brevet :
01.06.83

(51) Int. Cl.³ : **G 11 B 7/08**

(21) Numéro de dépôt : **79400921.7**

(22) Date de dépôt : **27.11.79**

(54) **Dispositif d'accès à une piste portée par un support enregistrable ou lisible optiquement et système optique comportant un tei dispositif.**

(30) Priorité : **08.12.78 FR 7834649**

(43) Date de publication de la demande :
**25.06.80 Bulletin 80/13**

(45) Mention de la délivrance du brevet :
**01.06.83 Bulletin 83/22**

(84) Etats contractants désignés :
**DE GB NL**

(56) Documents cités :
**DE A 2 126 324**
**DE A 2 645 326**
**FR A 2 262 849**
**FR A 2 328 210**
**US A 3 530 258**
**PATENTS ABSTRACTS OF JAPAN, vol. 1, no. 8, 16 mars 1977, page 329 E 76**
**IBM TECHNICAL DISCLOSURE BULLETIN, vol. 17, no. 10, mars 1975, Armonk, N.Y., USA, R.W. LISSNER et al. « Disk file actuator », pages 3016-3018**

(73) Titulaire : **THOMSON-CSF**
**173, Boulevard Haussmann**
**F-75379 Paris Cedex 08 (FR)**

(72) Inventeur : **Arquie, Louis**
**"THOMSON-CSF" - SCPI 173, bld Haussmann**
**F-75360 Paris Cedex 08 (FR)**
Inventeur : **Bricot, Claude**
**"THOMSON-CSF" - SCPI 173, bld Haussmann**
**F-75360 Paris Cedex 08 (FR)**

(74) Mandataire : **Lepercque, Jean et al**
**THOMSON-CSF SCPI 173, Bld Haussmann**
**F-75379 Paris Cedex 08 (FR)**

Jouve, 18, rue St-Denis, 75001 Paris, France

Dispositif d'accès à une piste portée par un support enregistrable ou lisible optiquement et système optique comportant un tel dispositif

L'invention se rapporte au domaine du stockage d'information sur supports lisibles optiquement par un rayonnement concentré et a plus particulièrement pour objet un dispositif d'accès à une piste portée par un support enregistrable ou lisible optiquement, et un système optique comportant un tel dispositif d'accès.

La conjonction des progrès réalisés dans les techniques des lasers, des couches minces ainsi que dans la technique des asservissements a permis de réaliser un support d'information lisible optiquement sur lequel peuvent être enregistrés $10^{10}$ éléments binaires d'information, ce support ayant la forme d'un disque d'une trentaine de centimètres de diamètre.

Un tel support peut être utilisé notamment comme mémoire informatique, mais il faut pour cela disposer d'un dispositif d'accès rapide à la piste, soit pour inscrire l'information en un point déterminé d'une piste lisse inscrite préalablement, soit pour lire l'information inscrite en un point quelconque de la piste.

Les dispositifs d'accès à l'information actuellement réalisés ont été destinés à des disques sur lesquels l'information enregistrée contient un signal vidéo (vidéodisques) ; de tels dispositifs permettent d'accéder à l'information en quelques secondes et s'ils sont suffisants pour cette application, ils ne le sont plus pour une application informatique.

Dans les dispositifs d'accès antérieurement connus, le positionnement radial correct de la tête de lecture optique est assuré par des moyens mécaniques assurant soit le déplacement du disque, soit le déplacement de la tête de lecture. Lorsque la tête de lecture et le disque sont correctement positionnés l'un par rapport à l'autre, le suivi radial de la piste circulaire ou en hélice sur laquelle doit être ou est enregistrée l'information est réalisé à l'aide d'un miroir galvanométrique mobile autour d'un axe parallèle au plan du disque qui réfléchit le faisceau vers l'objectif de lecture. L'asservissement vertical tel que le faisceau lumineux de lecture reste correctement focalisé sur le disque est assuré par une bobine électromagnétique assurant un déplacement vertical de lecture.

Il est également connu d'effectuer le suivi radial de la piste à l'aide d'une seconde bobine électromagnétique. L'abrégé de la demande de brevet japonais JP-A-51 114 102, paru dans « PATENTS ABSTRACTS OF JAPAN », volume 1, n° 8 du 16 mars 1977, page 329 E 76, est relatif à un dispositif de lecture d'un signal sur un disque combinant en un seul assemblage deux bobines électromagnétiques agissant, suivant essentiellement deux directions orthogonales entre elles, sur l'objectif de lecture de manière à obtenir, simultanément un asservissement radial de suivi de piste et un asservissement vertical de focalisation. Ce dispositif permet de supprimer le miroir galvanométrique.

Quelle que soit la solution retenue, l'ensemble formé par la tête optique et les moyens nécessaires à l'asservissement radial et à l'asservissement vertical a un poids qui ne peut guère être inférieur à 300 g, ce poids étant essentiellement dû aux circuits magnétiques. C'est tout cet ensemble qui doit être déplacé lors du prépositionnement de la tête de lecture par rapport au disque pour l'accès rapide à un sillon de la piste. Du fait que cette masse à déplacer est assez grande, les temps d'accès correspondants sont élevés.

L'invention provoque un dispositif d'accès à l'information dans lequel l'équipage mobile a une masse considérablement réduite par rapport à celle des équipages mobiles réalisés antérieurement qui de ce fait permet de diminuer considérablement les temps d'accès.

L'invention a donc pour objet un dispositif d'accès à une piste portée par un support enregistrable ou lisible optiquement par un rayonnement focalisé, cette piste comportant des sillons régulièrement espacés, du type comportant un circuit magnétique muni d'au moins un entrefer dans lequel se déplace un équipage mobile comportant au moins un premier circuit électrique solidaire d'une tête optique d'axe optique orthogonal au plan du support assurant respectivement le maintien de la focalisation de cette tête sur la piste et un deuxième circuit (4) permettant le suivi de la piste dans le plan du support caractérisé en ce que le circuit magnétique est fixe, que chaque entrefer forme un plan sensiblement perpendiculaire au support de la piste et sécant de tous les sillons, que ledit premier circuit électrique comprend au moins une partie active comportant des conducteurs parallèles audit support située dans le plan de l'entrefer pour développer, lorsque le circuit est parcouru par un courant électrique une force dirigée selon l'axe optique de la tête optique et permettant de déplacer l'équipage mobile pour maintenir ladite focalisation, que ledit second circuit électrique comprend au moins une partie active comportant des conducteurs orthogonaux aux conducteurs audit premier circuit électrique placés dans le champ magnétique pour développer lorsque le circuit est parcouru par un courant électrique une force dirigée dans le plan du support orthogonalement aux pistes assurant le déplacement radial de l'équipage mobile pour ledit suivi, et pouvant assurer en outre une avance d'un pas de piste pour effectuer un saut de piste et en ce qu'il comprend des moyens supplémentaires appliquant à l'équipage mobile une force dirigée dans le plan du support orthogonalement aux pistes pour assurer un déplacement radial rapide de l'équipage mobile de manière à déplacer et à positionner cet équipage mobile en regard de l'un quelconque desdits sillons.

L'avance radiale rapide de la tête de lecture peut être créée par une force radiale créée par des conducteurs verticaux dans le champ magnétique ou créée par un moteur linéaire exerçant cette force radiale sur l'équipage mobile.

Il est par ailleurs connu, de par l'article de R.W. LISSNER et al paru dans la revue U.S. : « IBM Technical Disclosure Bulletin », volume 17, n° 10, de mars 1975, pages 3016-3018, de réaliser un mouvement d'approche rapide à l'aide d'un équipage mobile comprenant une pièce intermédiaire également mobile, cette dernière pièce permettant un déplacement fin par rapport audit équipage.

Dans une variante d'exécution, l'équipage mobile du dispositif de l'invention comporte une telle disposition.

La masse totale de l'équipage mobile, dans toutes les variantes d'exécution du dispositif de l'invention, peut ne pas dépasser une quinzaine à une vingtaine de grammes et permet de réaliser le positionnement de la tête optique en un temps considérablement réduit par rapport aux dispositifs d'accès antérieurs.

L'invention a encore pour objet un système optique comportant un support enregistrable ou lisible optiquement, selon les revendications 10 à 12, comportant un tel dispositif.

L'invention sera mieux comprise et d'autres caractéristiques apparaîtront à l'aide de la description qui suit en référence aux figures annexées.

La figure 1 représente schématiquement le disque support d'information et les forces à appliquer à la tête de lecture pour l'asservissement radial et l'asservissement vertical.

La figure 2 représente un circuit magnétique vertical et les éléments de courant nécessaires pour créer.

La figure 3 représente un circuit magnétique horizontal et les éléments de courant nécessaires pour créer ces forces.

La figure 4 représente un circuit magnétique horizontal à deux entrefers.

Les figures 5 et 6 représentent deux modes de réalisation de circuit magnétique vertical à deux entrefers.

La figure 7 représente un circuit magnétique vertical à champ commutant.

La figure 8 représente un mode de réalisation plus particulier du circuit magnétique de la figure 2.

La figure 9 représente un ensemble, formé d'une glissière, d'une plaquette portant les circuits électriques nécessaires, et de la tête de lecture, permettant en combinaison avec le circuit magnétique de la figure 8 d'assurer un déplacement vertical et un déplacement radial de la tête de lecture par rapport au disque.

Les figures 10 et 11 représentent deux modes de réalisation de la tête optique à fixer à la plaquette portant les circuits électriques, pour former l'équipage mobile.

La figure 12 représente schématiquement un lecteur optique.

Le dispositif d'accès est décrit précisément dans le cadre de la lecture optique de supports sur lesquels l'information est enregistrée. Mais le même dispositif d'accès est utilisable pour l'enregistrement d'information sur un support sur lequel une piste lisse a été préalablement enregistrée, l'information étant inscrite sur cette piste.

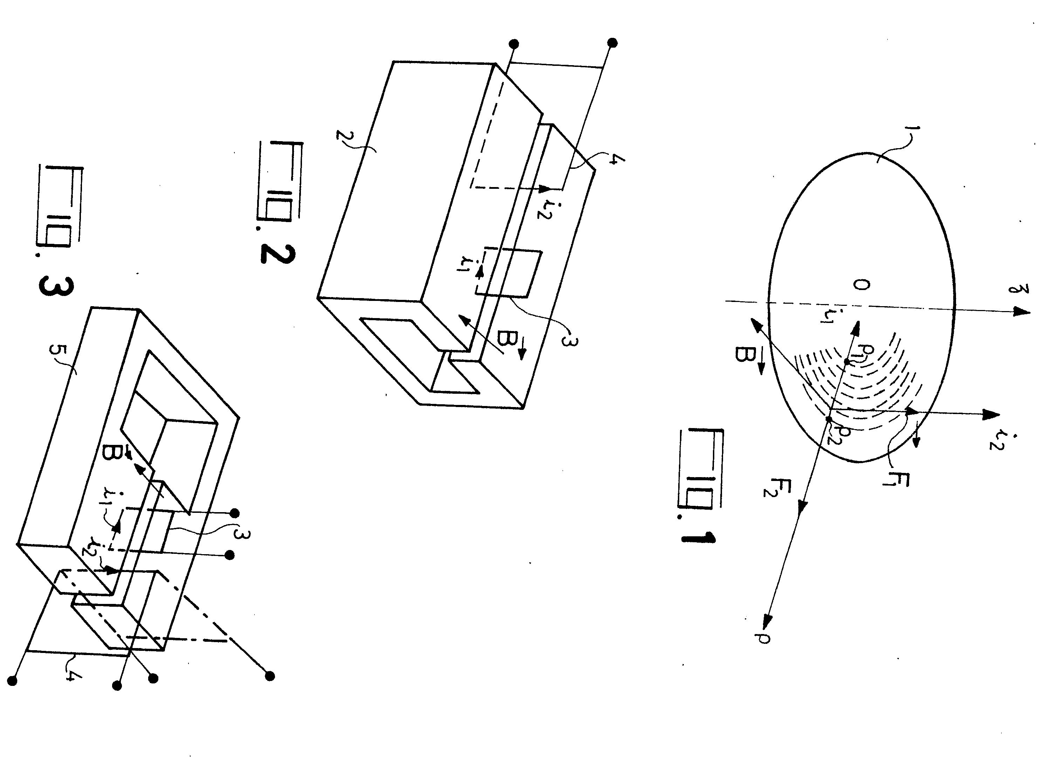

Sur la figure 1, un disque 1 portant des éléments d'information enregistrés sur des cercles concentriques ou sur une spirale (partiellement représentés) forment une piste de largeur inférieure au micromètre (0,6 $\mu$m) et de profondeur faible (0,15 $\mu$m), le pas entre les pistes étant inférieur à 2 $\mu$m (1,6 $\mu$m par exemple). Le disque support d'information a typiquement une trentaine de centimètres de diamètre et les éléments d'information sont enregistrés sur une couronne d'environ 10 cm de rayon. La lecture (et l'enregistrement) d'une piste est effectuée au moyen d'un faisceau laser focalisé sur le disque à l'aide d'un objectif de grande ouverture du type objectif de microscope. De ce fait, une faible variation de la distance disque-objectif conduit à une défocalisation gênante pour la lecture du fait que la lecture est fondée sur les phénomènes de diffraction du rayonnement concentré sur le disque par le relief inscrit sur la piste. Il est donc nécessaire, dans les dispositifs de lecture destinés à ce type de disque, de prévoir un asservissement vertical de focalisation, les qualités mécaniques du disque n'étant pas suffisantes pour que le signal de lecture soit correct en l'absence d'un tel asservissement. Les dispositifs de lecture actuellement utilisés réalisent cette fonction au moyen d'un solénoïde mobile solidaire de l'objectif de lecture glissant dans un entrefer circulaire. Il est également nécessaire de prévoir un dispositif assurant le suivi radial de la piste. Suivant la direction radiale, la précision dans le positionnement du spot de lecture doit être de l'ordre de 0,1 $\mu$m pour assurer une bonne lecture de la piste. Les dispositifs de lecture actuellement utilisés assurent la poursuite radiale au moyen d'un miroir galvanométrique susceptible de tourner autour d'un axe parallèle au plan du disque et orthogonal au rayon, placé au-dessus de la tête optique et recevant le faisceau laser. Le positionnement radial de la tête de lecture optique par rapport au disque est assuré par des moyens mécaniques, un moteur entraînant une vis mère assurant le déplacement du disque ou de la tête optique suivant cette direction radiale.

Dans ce type de dispositifs, les masses mobiles sont grandes, 200 à 300 g pour l'ensemble formé par le pot magnétique assurant l'asservissement vertical, le miroir galvanométrique, l'objectif de lecture et l'aimant assurant l'asservissement radial. Or la force nécessaire au déplacement de cet ensemble est proportionnelle à la masse à mettre en mouvement. De plus, si l'on souhaite déplacer radialement le même ensemble pour l'accès rapide à une piste suivant la direction radiale, les accélérations nécessaires sont très grandes.

L'invention propose un dispositif assurant l'asservissement vertical et l'asservissement radial de postion par déplacement d'un équipage mobile de très faible poids (au plus une vingtaine de grammes), ces asservissements étant commandés par des courants proportionnels aux déplacements à obtenir, cet équipage pouvant dès lors être déplacé radialement rapidement pour l'accès rapide en subissant des accélérations très supérieures à celles susceptibles d'être mises en jeu dans les dispositifs antérieurement connus. Pour cela, des éléments conducteurs parcourus par les courants de commande sont placés dans un champ magnétique fixe, orthogonal au rayon et s'étendant sur toute la longueur utile du rayon du disque ($\simeq$ 10 cm), et se déplaçant dans ce champ magnétique, l'objectif de lecture étant rendu solidaire de ces éléments mobiles.

Sur la figure 1 ont été représentées les forces $F_1$ et $F_2$ à créer pour obtenir respectivement l'asservissement vertical et l'asservissement radial de la tête de lecture. Ces forces $F_1$ et $F_2$ sont créées au moyen d'éléments conducteurs linéaires respectivement dirigés suivant les directions radiales ($\rho$) et verticales (z) parcourus par des courants $i_1$ et $i_2$ et plongés dans un champ magnétique B s'étendant au moins entre les abscisses $\rho_1$ et $\rho_2$ entre lesquelles le disque est gravé. Pour cela, le dispositif selon l'invention utilise un aimant permanent ou une bobine d'induction produisant un champ magnétique uniforme dans un entrefer plan vertical. Les figures 2 et 3 montrent deux types de circuits magnétiques susceptibles d'être utilisés.

La figure 2 montre un aimant permanent formé d'un circuit magnétique vertical 2. Deux bobines plates sont disposées de telle manière que la première, 3, ait dans l'entrefer des éléments de circuits horizontaux de manière à produire une force verticale lorsqu'elle est parcourue par un courant $i_1$, la seconde 4, ayant dans l'entrefer des éléments de circuits verticaux de manière à produire une force dirigée suiant la direction de l'entrefer lorsqu'elle est parcourue par un courant $i_2$. Les circuits électriques et les circuits magnétiques sont refermés de manière à ne pas produire de forces annulant les forces utiles. Dans les deux cas représentés sur les figures 2 et 3, les circuits électriques se referment en dehors de l'entrefer. Le circuit magnétique est orienté pour que la direction de l'entrefer corresponde à une direction radiale du disque.

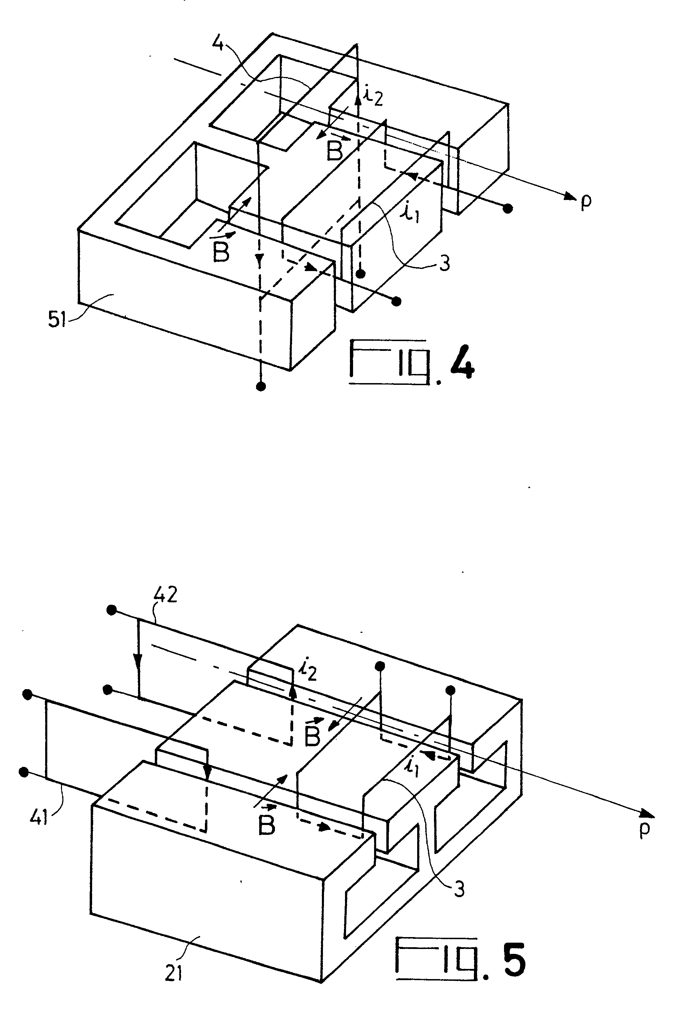

La figure 3 montre un aimant permanent formé d'un circuit magnétique horizontal 5. Les bobines plates 3 et 4 peuvent être disposées dans l'entrefer de la même manière que dans le circuit magnétique de la figure 2, mais la bobine 4 peut également être disposée comme représenté en pointillés sur la figure, de telle manière qu'elle entoure une pièce polaire. Ces deux bobines se referment comme dans le cas précédent à l'extérieur de l'entrefer. En pratique, il est nécessaire que les deux bobines 3 et 4 soient mécaniquement liées l'une à l'autre, l'objectif solidaire de l'ensemble étant ainsi susceptible d'être déplacé simultanément suivant les directions radiales et verticales. Les circuits électriques peuvent également être refermés dans un deuxième entrefer parallèle au premier dans lequel le champ magnétique est de sens contraire par rapport au champ magnétique dans le premier entrefer. Une telle structure permet alors de doubler, à courant constant, la force résultante appliquée à la bobine par rapport aux structures à un entrefer, le courant circulant en sens contraire dans les éléments conducteurs plongés respectivement dans ces deux entrefers où les champs magnétiques sont opposés. Les figures 4, 5 et 6 illustrent de telles solutions.

La figure 4 montre un circuit magnétique horizontal 51 à deux entrefers dans lesquels les champs magnétiques sont de sens contraire. La bobine 3 est disposée horizontalement à l'extérieur du circuit magnétique et pliée à angle droit à ses deux extrémités de telle manière que les éléments de circuits parallèles à la direction radiale se trouvent respectivement plongés dans les deux entrefers. La bobine plate 4 est verticale et perpendiculaire à l'entrefer et entoure la pièce polaire centrale de telle sorte que des éléments de circuits verticaux soient plongés dans les deux entrefers, les forces créées s'additionnant pour assurer un déplacement radial de la bobine.

La figure 5 montre un circuit magnétique vertical, 21, à deux entrefers dans lequel la bobine 3 destinée à l'obtention de la force verticale a la même forme que celle représentée sur la figure 4. Le circuit électrique destiné à l'obtention de la force radiale est formé de deux bobines 41 et 42 disposées verticalement et parallèlement aux entrefers, ces circuits électriques étant refermés à l'extérieur des entrefers comme dans les solutions décrites en référence aux figures 2 et 3. Ces deux bobines sont parcourues par des courants circulant au sens contraire de manière que les forces créées coopèrent pour l'obtention du déplacement radial. Comme précédemment, il est nécessaire que ces trois circuits électriques soient mécaniquement solidaires de façon que l'objectif de lecture suspendu à l'ensemble puisse être déplacé simultanément suivant les directions radiales et verticales.

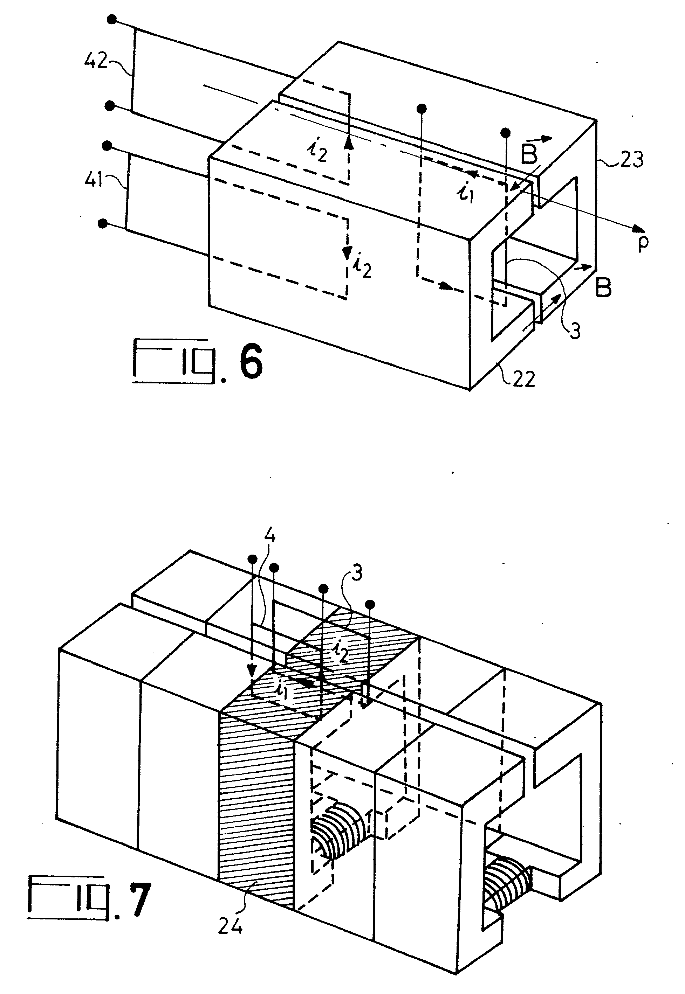

La figure 6 montre une autre solution à deux entrefers dans laquelle le circuit magnétique est formé de deux parties 22 et 23 formant deux entrefers verticaux coplanaires. La bobine 3 est alors disposée parallèlement aux entrefers de telle manière que les éléments de circuits électriques horizontaux parcourus par le même courant en sens contraire soient plongés dans ces deux entrefers. Comme dans la solution décrite en référence à la figure 5, deux circuits électriques 41 et 42 comportant des éléments conducteurs verticaux placés dans les deux entrefers sont prévus pour conjuguer leurs effets et produire un déplacement radial de l'ensemble. De plus, comme précédemment, les trois circuits électriques doivent être mécaniquement solidaires.

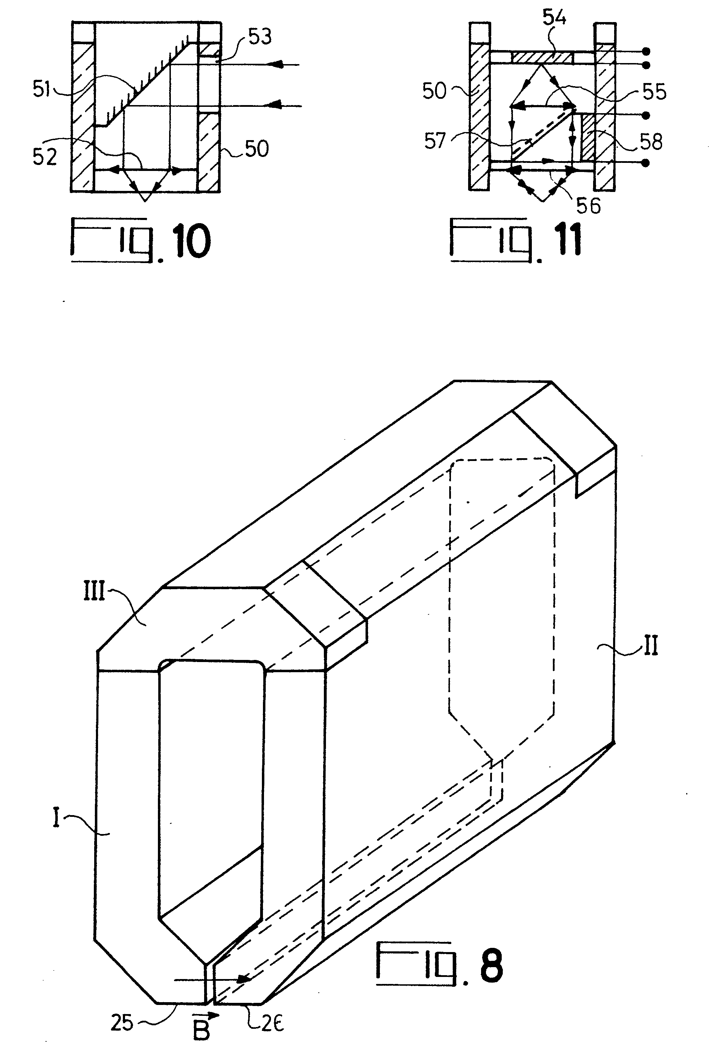

Dans toutes les solutions décrites précédemment en référence aux figures 2 à 6, le champ magnétique uniforme est créé dans tout l'entrefer. Par conséquent, pour que les circuits électriques se referment à l'extérieur du champ, les bobines doient avoir une longueur supérieure à la longueur de l'entrefer. Une solution permettant d'éviter l'inconvénient résultant de la grande taille et donc de la masse, des circuits assurant le déplacement radial, est représentée sur la figure 7. Le circuit magnétique est un circuit vertical dans lequel l'entrefer est orienté comme celui représenté sur la figure 2, mais dans lequel le champ magnétique n'est créé que sur une fraction de la longueur totale. Pour cela, le circuit magnétique est formé de plusieurs électro-aimants tels que 24, adjacents, un seul de ces électro-aimants étant actif à un instant donné. La commutation d'un élément à l'élément adjacent est effectuée au fur et à mesure de la progression radiale de l'équipage mobile. Ainsi la taille du circuit électrique, 4, assurant le déplacement radial peut être réduite à la longueur des électro-aimants.

Le circuit magnétique étant défini, l'équipage mobile doit alors être prévu pour que son mouvement soit guidé de telle manière qu'il n'y ait pas d'oscillations et doit être suffisamment rigide pour qu'il n'y ait pas de résonance.

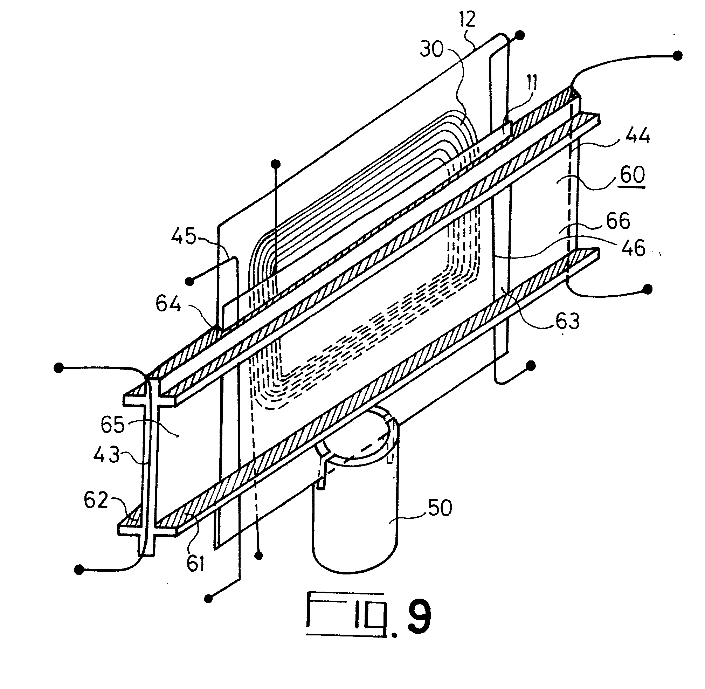

La figure 9 montre l'équipage mobile et la figure 8 montre un exemple particulier de circuit magnétique du type représenté sur la figure 2 associé à cet équipage mobile. Le circuit magnétique est réalisé en trois parties I, II et III. Ce peut être un aimant permanent ou un circuit à électroaimant ; dans ce dernier cas, des bobines sont enroulées autour des parties I et II dans un sens tel que l'induction magnétique dans l'entrefer soit l'induction B représentée. La largeur de l'entrefer peut être réglée avec des cales en matériau non magnétique, bronze-berryllium par exemple. Le champ magnétique créé le long de l'entrefer peut être de l'ordre de 1,5 Tesla, la largeur de l'entrefer étant de l'ordre de 1 à 2 mm. Les deux faces de l'entrefer sont rectifiées et un microfluonage est effectué de façon que le glissement de l'équipage mobile dans l'entrefer s'effectue de manière aussi satisfaisante que possible. La solution a un seul entrefer a été retenue car dans les solutions à deux entrefers, il faut que les faces de ces deux entrefers soient parfaitement parallèles pour assurer un bon fonctionnement du dispositif, ce qui nécessite des précisions mécaniques d'alignement qui peuvent être difficiles à obtenir. Cependant, les solutions à deux entrefers peuvent, comme indiqué ci-dessus, être intéressantes pour augmenter les forces de déplacement. Les circuits électriques plats peuvent être réalisés de la manière suivante : un fil de cuivre est humecté de colle polymérisable et enroulé sur un mandrin de forme rectangulaire. Après polymérisation de la colle, la bobine 30 ainsi formée est démoulée. Du fait de sa faible épaisseur, le circuit obtenu n'est pas suffisamment rigide ; pour obtenir la rigidité nécessaire à son bon glissement, le circuit est collé entre deux fines plaques de verre parfaitement planes 11 et 12. Sur la figure 9, la bobine 30 est vue en partie en transparence à travers la plaque 11. Des fils verticaux, 45 et 46, sont placés entre les deux plaques. Ces fils peuvent être utilisés pour assurer le déplacement radial nécessaire pour le suivi radial de la commande de saut de piste.

Une autre méthode pour former les circuits électriques plats consiste à former un circuit imprimé sur une céramique préalablement rectifiée. En utilisant un circuit imprimé double face, chacun des deux circuits correspondant respectivement à l'asservissement radial et à l'asservissement vertical peut être imprimé sur une de ces deux faces.

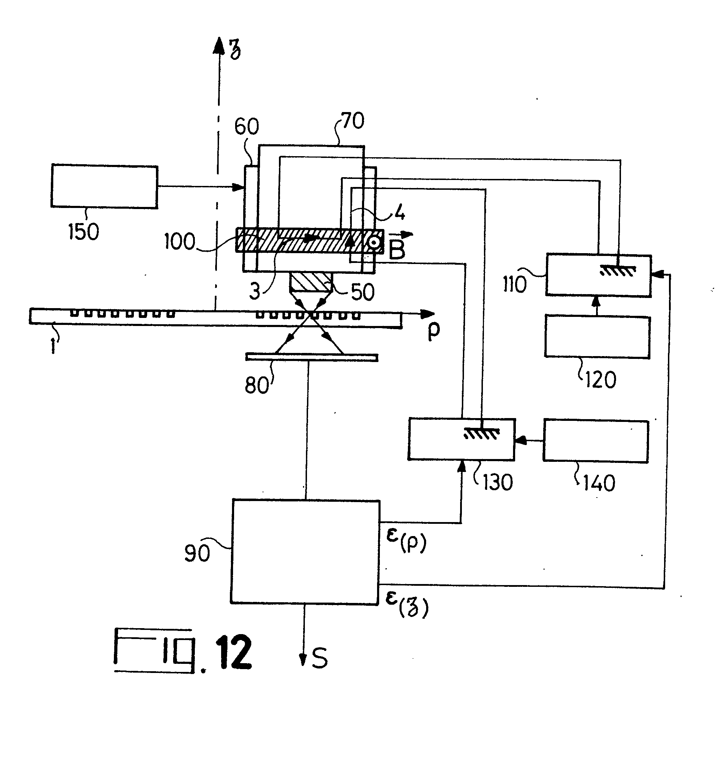

De telles plaquettes portant les circuits électriques ont une masse qui n'excède pas 5 à 7 g. La tête optique à déplacer est fixée à la plaquette ainsi réalisée. Cette tête optique est contenue dans un cylindre 50 en « rilsan » ou en « plexiglass », ce dernier matériau permettant d'effectuer le collage des différents éléments optiques plus facilement. Les figures 10 et 11 représentent, en coupe verticale, deux exemples de têtes optiques.

Sur la figure 10, la tête optique est destinée à recevoir le rayonnement d'une source extérieure. Elle comporte un miroir de renvoi, 51, fixe par rapport à la tête, et un objectif 52 du type objectif de microscope (ayant une grande ouverture) fixé à l'enveloppe cylindrique 50 dans laquelle une ouverture latérale 53 est prévue pour recevoir le faisceau. Lorsque la tête optique est destinée à permettre une lecture par réflexion du disque, elle peut comporter en outre une lame semi-transparente placée entre l'objectif et le miroir, mais il peut être plus simple de prévoir cette lame semi-transparente à l'extérieur de la tête optique, entre le miroir et la source.

La figure 11 représente un second mode de réalisation de la tête optique comportant une source intégrée 54 placée dans la tête elle-même. Cette source peut être un laser à semi-conducteur. Deux objectifs 55 et 56 sont rendus solidaires de l'enveloppe 50 et permettent de focaliser le rayonnement issu du laser. Ce second mode de réalisation de la tête optique est avantageux dans le cadre d'un lecteur optique utilisant un dispositif de déplacement de l'équipage mobile du type de celui représenté sur les figures 8 et 9. En effet, il n'y a plus à se préoccuper du positionnement de la source par rapport à la tête optique. Dans le cas d'une lecture par réflexion, il est également possible de disposer dans la tête optique un élément semi-transparent, 57, et un dispositif de détection intégré 58, du type photodiode. Dans ce cas, il faut prévoir des conducteurs pour l'alimentation du laser et des conducteurs de sortie pour le détecteur qui ne perturbent pas le glissement de l'ensemble de l'équipage mobile. Pour que la plaquette soit guidée dans ses déplacements et plus particulièrement dans ses déplacements horizontaux, l'équipage mobile de la figure 9 comporte en outre une pièce intermédiaire, 60, fixe par rapport à l'entrefer sauf pour le mouvement d'avance radiale rapide, la force nécessaire à cette avance radiale rapide étant appliquée directement sur cette pièce intermédiaire. Cette pièce 60 représentée sur la figure 9 est glissée dans l'entrefer du circuit magnétique, par exemple dans l'entrefer du circuit représenté sur la figure 8 de telle manière que les faces horizontales 61 et 62 s'appuient sur les faces 25 et 26 des pièces polaires. La pièce 60 comporte deux fentes, 63 et 64, dans lesquelles est enfilée la plaquette portant les circuits électriques. Un jeu de quelques dizaines de micromètres est prévu pour permettre le déplacement dans le sens radial par l'intermédiaire d'un courant appliqué dans les conducteurs 45 et 46, pour le suivi radial et le saut de piste. L'avance radiale rapide peut, en suivant le même principe, être obtenue en collant sur les faces verticales des deux extrémités de la pièce 60 des fils verticaux 43 et 44. Pour une application dans laquelle un temps d'accès de l'ordre de 200 ms serait acceptable, un courant de 5A parcourant ces fils 43 et 44 serait suffisant pour créer une force assurant le déplacement horizontal de l'ensemble. Pour des temps d'accès plus courts, il est possible d'utiliser des moyens plus classiques du type moteur linéaire agissant sur la pièce 60. Les faces verticales telles que 65 et 66 s'appuyant sur les faces verticales de l'entrefer sont destinées à guider le glissement horizontal de l'ensemble.

Le dispositif d'accès à l'information doit comporter un circuit magnétique dont l'entrefer s'étend sur la partie utile du rayon du disque dans lequel est créé un champ magnétique uniforme. L'équipage mobile glisse verticalement et horizontalement dans cet entrefer au moyen de courants circulant horizontalement et verticalement dans cet entrefer, ces courants étant matérialisés par des circuits conducteurs de faible masse se refermant à l'extérieur de l'entrefer. Le dispositif comporte de plus des moyens de guidage des circuits qui peuvent être, soit l'entrefer lui-même, soit une fente parallèle à l'entrefer prévue dans une pièce intermédiaire. La tête optique forme partie de l'équipage mobile et est conçue pour être aussi légère que possible. Le faible poids de l'ensemble déplaçable verticalement peut permettre d'effectuer une vobulation verticale du spot de lecture autour d'une position moyenne variable en fonction de la défocalisation verticale détectée, un courant alternatif étant superposé à un courant ayant une composante continue variable correspondant à la position moyenne du spot de focalisation sur l'axe optique. Pour que les conducteurs permettant d'alimenter les circuits conducteurs placés dans l'entrefer ne perturbent pas le mouvement de l'équipage mobile, il est possible de prévoir sur le circuit magnétique fixe des contacts au mercure qui assurent le relais entre les circuits conducteurs mobiles et les circuits d'alimentation extérieurs fixes. De plus, la pièce intermédiaire 60 étant fixe sauf lorsqu'il y a avance radiale rapide, il est possible de former un premier relais pour les conducteurs 45, 46 et la bobine 30 en reliant les extrémités de ces conducteurs à des points de contacts sur la pièce 60. Ces contacts n'ont pas été représentés sur les figures 8 et 9 pour ne pas surcharger les figures.

La figure 12 représente schématiquement un lecteur optique. Les mêmes éléments que sur les figures précédentes ont été désignés par les mêmes repères. Le disque 1 tourne autour de son axe z fixe. Une induction magnétique B parallèle à la direction tangentielle des pistes est créée dans un entrefer vertical 100, au moyen d'un circuit magnétique non représenté sur la figure. Une plaquette 70 portant les circuits électriques 3 et 4 respectivement destinés au déplacement vertical et au déplacement radial de faible amplitude, est susceptible de glisser horizontalement et verticalement dans cet entrefer. La tête optique 50 est solidaire de cette plaquette. On a supposé que la source étant intégrée à l'intérieur de la tête. Cette plaquette 70 est solidaire d'une pièce intermédiaire 60 mobile pour l'avance radiale rapide. Le dispositif de lecture comporte en outre un dispositif de détection du rayonnement émergent du disque 80. Sur la figure le disque a été supposé lisible par transmission et le dispositif de détection 80 est donc disposé de l'autre côté du disque par rapport à la tête de lecture et s'étend sur toute la partie enregistrée du disque. Mais cette disposition n'est pas limitative et pour un disque lisible par réflexion la tête optique peut être celle représentée sur la figure 11, le dispositif de détection étant dans la tête elle-même. La sortie du dispositif de détection 80 est reliée à un dispositif de traitement de signal 90. Ce dispositif de traitement est l'un de ceux déjà connus. (Le dispositif de détection peut comporter plusieurs photodétecteurs convenablement orientés, fournissant chacun un signal appliqué au dispositif de traitement). Le dispositif de traitement fournit un signal d'information S, un signal d'erreur de focalisation $\varepsilon(z)$ et un signal d'erreur de position radiale $\varepsilon(\rho)$. Le signal $\varepsilon(z)$ est appliqué à une première entrée d'un additionneur 110, à la seconde entrée duquel peut être appliqué un signal alternatif fourni par un générateur 120. L'additionneur 110 est monté en générateur de courant, est relié au circuit 3 et commande le déplacement vertical de l'équipage mobile. Le signal $\varepsilon(\rho)$ est appliqué à une première entrée d'un circuit additionneur 130, à la seconde entrée duquel peut être appliqué un signal $S_p$ formé d'impulsions issues d'un générateur d'impulsions 140, chaque impulsion correspondant à une avance radiale d'un pas de piste et assurant le saut de piste. L'additionneur 130, monté en générateur de courant est relié au circuit 4 et commande le suivi radial de la piste et le saut de piste. Pour l'avance radiale rapide un moteur linéaire 150 agit directement sur la pièce intermédiaire 60 solidaire de la plaquette portant elle-même la tête optique.

Cette disposition n'est pas limitative, et comme expliqué ci-dessus, l'avance radiale rapide peut être commandée par un courant circulant dans un conducteur vertical placé dans l'entrefer du circuit magnétique.

L'invention décrite en considérant que le support d'information a la forme d'un disque n'est pas limitée à cette disposition. En particulier, le support peut avoir la forme d'une bande lisible optiquement. Dans ce cas, l'entrefer doit s'étendre orthogonalement à la direction de défilement de la bande et sur la longueur utile, le champ magnétique étant toujours dirigé suivant la direction de défilement de telle manière qu'un circuit électrique ayant dans l'entrefer des conducteurs orthogonaux à la direction de défilement et orthogonaux au plan du support, créent une force agissant sur l'équipage mobile parallèlement à l'axe optique.

Pour le suivi de la piste ou le saut d'une piste à une piste voisine, un circuit électrique comporte dans l'entrefer des conducteurs qui créent, lorsqu'ils sont parcourus par un courant, une force dirigée dans le plan du support orthogonalement à la direction de défilement.

De plus, comme indiqué ci-dessus, le dispositif d'accès décrit dans le cadre de la lecture optique est utilisable dans un dispositif d'enregistrement optique dans lequel l'accès rapide à une zone quelconque du disque est souhaité pour l'inscription d'information sur une piste lisse préalablement inscrite utilisée par comptage des sillons traversés pour localiser la zone recherchée.

## Revendications

1. Dispositif d'accès à une piste portée par un support (1) enregistrable ou lisible optiquement par un rayonnement focalisé, cette piste comportant des sillons régulièrement espacés, du type comportant un circuit magnétique (2) muni d'au moins un entrefer (100) dans lequel se déplace un équipage mobile (60-70) comportant au moins un premier circuit électrique (3) solidaire d'une tête optique (50) d'axe optique orthogonal au plan du support (1) assurant respectivement le maintien de la focalisation de cette tête sur la piste et un deuxième circuit (4) permettant le suivi de la piste dans le plan du support, caractérisé en ce que le circuit magnétique est fixe, que chaque entrefer (100) forme un plan sensiblement perpendiculaire au support de la piste et croisant de tous les sillons, que ledit premier circuit électrique (3) comprend au moins une partie active comportant des conducteurs (3) parallèles audit support (1) située dans le plan de l'entrefer (100) pour développer, lorsque le circuit est parcouru par un courant électrique ($i_1$) une force ($F_1$) dirigée selon l'axe optique de la tête optique (50) et permettant de déplacer l'équipage mobile (11-12) pour maintenir ladite focalisation, que ledit second circuit électrique (4) comprend au moins une partie active comportant des conducteurs orthogonaux aux conducteurs dudit premier circuit électrique (3) placés dans le champ magnétique pour développer lorsque le circuit est parcouru par un courant électrique ($i_2$) une force dirigée dans le plan du support orthogonalement aux pistes ($F_2$) assurant le déplacement de l'équipage mobile (11-12) pour ledit suivi, et pouvant assurer en outre une avance d'un pas de piste pour effectuer un saut de piste et en ce qu'il comprend des moyens supplémentaires (150 ou 43-44) appliquant à l'équipage mobile une force dirigée dans le plan du support orthogonalement aux pistes pour assurer un déplacement rapide de l'équipage mobile (11-12) de manière à déplacer et à positionner cet équipage mobile en regard de l'un quelconque desdits sillons.

2. Dispositif selon la revendication 1, caractérisé en ce que, le support (1) ayant la forme d'un disque et la piste formant une spirale ou des cercles concentriques, l'entrefer (100) s'étend suivant une direction radiale du disque.

3. Dispositif selon l'une quelconque des revendications 1 ou 2, caractérisé en ce que le circuit magnétique est formé d'électro-aimants adjacents (24) ayant leurs entrefers alignés dans la direction radiale, ces électro-aimants étant alimentés successivement au fur et à mesure du déplacement radial de l'équipage mobile pour que seule la partie active des circuits (34) de déplacement radial soit plongée dans un champ magnétique efficace.

4. Dispositif selon l'une quelconque des revendications 1 à 3, caractérisé en ce que les moyens assurant le déplacement rapide sont constitués par un moteur linéaire (150).

5. Dispositif selon l'une quelconque des revendications 1 à 2, caractérisé en ce que les moyens assurant le déplacement rapide sont constitués par un troisième circuit électrique (43-44) dont les portions de conducteur parallèles à l'axe optique sont placées dans l'entrefer.

6. Dispositif selon l'une quelconque des revendications précédentes, caractérisé en ce que l'équipage mobile comporte en outre une pièce intermédiaire (60), le premier circuit électrique (30) étant fixé à une plaquette (11-12) susceptible de glisser parallèlement à l'axe optique dans cette pièce intermédiaire comportant une fente (64-63) prévue à cet effet, cette pièce intermédiaire s'appuyant sur des faces (25-26) des pièces polaires du circuit magnétique parallèles au support pour le glissement radial rapide, la tête optique (50) étant fixée à la plaquette et en ce qu'un jeu est prévu entre la plaquette (11-12) et les bords de la fente (64-63) de la pièce intermédiaire (60) pour permettre le suivi et les sauts de piste ; la plaquette portant en outre le deuxième circuit électrique comportant des conducteurs parallèles à l'axe optique et placés dans le champ magnétique (45-46).

7. Dispositif selon la revendication 6, caractérisé en ce que des conducteurs parallèles à l'axe optique (43, 44) sont placés sur la pièce intermédiaire (60) dans le champ magnétique pour créer la force radiale d'avance rapide.

8. Dispositif selon l'une quelconque des revendications 6 à 7, caractérisé en ce que la tête optique comporte une source de rayonnement intégrée (54).

9. Système optique comportant un support enregistrable ou lisible optiquement (1) et un dispositif (50-60-70) selon l'une quelconque des revendications 1 à 8, caractérisé en ce qu'il comporte une boucle d'asservissement (90-110-120) de focalisation commandant le courant circulant dans le premier circuit électrique (3) pour la commande de focalisation et une boucle d'asservissement radial (90-130) commandant le courant dans le second circuit électrique (4) pour le suivi radial et les sauts de piste.

10. Système optique selon la revendication 9, caractérisé en ce qu'il comporte en outre un dispositif de commande d'avance radiale rapide (150) agissant sur l'équipage mobile.

11. Système optique selon la revendication 9, caractérisé en ce que le courant circulant dans le premier circuit électrique (3) est formé d'une composante continue variable correspondant à la position moyenne du spot de focalisation et d'une composante alternative permettant d'effectuer une vobulation du spot autour de sa position moyenne.

## Claims

1. A device giving access to a track carried by a medium (1) optically recordable or readable by focussed radiation, this track comprising evenly spaced grooves, of the type comprising a magnetic circuit (2), provided with at least one air gap (100), within which moves a mobile assembly (60-70), comprising at least one electric circuit (3) integral with an optical head (50), the optical axis of which is at right angle to the plane of the medium (1), keeping this head focussed on the track, and a second circuit (4) enabling the track to be followed on the plane of the medium, characterized by the fact that the magnetic circuit is fixed, that each gap (100) forms a plane approximately perpendicular to the track medium, and crossing all the grooves, that the first electric circuit (3) comprises at least one active part containing conductors (3) parallel to the medium (1) on the plane of the gap (100), in order to develop, when the circuit is traversed by an electric current ($i_1$), a force ($F_1$) along the optical axis of the optical head (50), and allowing the mobile assembly (11-12) to be moved in order to maintain focussing, that the second electric circuit (4) comprises at least one active part containing conductors at right angle to the conductors of the first electric circuit (3) placed in the magnetic field to develop, when the circuit is traversed by an electric current ($i_2$), a force ($F_2$) on the plane of the medium at right angle to the tracks, in order to move the mobile assembly (11-12) for the following operation, and which can also effect a forward movement of a track step, in order to jump track, and further characterized by the fact that it comprises additional means (150 or 43-44) of applying to the mobile assembly a force on the plane of the media at right angle to the tracks, in order to move the mobile assembly (11-12) quickly, so as to move and position this assembly facing any one groove.

2. A device as defined in claim 1, characterized by the fact that the medium (1) is disc-shaped, the track forms a spiral or concentric circles, and the air gap (100) extends along a radial line on the disc.

3. A device as defined in either of claims 1 and 2, characterized by the fact that the magnetic circuit is formed of adjacent electromagnets (24), the air gaps of which are aligned in the radial direction, these electromagnets being powered successively, as the mobile assembly moves radially, so that only the active part of the radial movement circuits (3 and 4) is plunged into an effective magnetic field.

4. A device as defined in any one or other of claims 1 to 3, characterized by the fact that the means of quick movement are formed of a linear motor (150).

5. A device as defined in any one or other of claims 1 and 2, characterized by the fact that the means of quick movement are formed of a third electric circuit (43-44), the portions of conductor of which parallel to the optical axis are placed in the air gap.

6. A device as defined in any one or other of the preceding claims, characterized by the fact that the mobile assembly further comprises an intermediate component (60), the first electric circuit (30) being fixed to a plate (11-12) capable of sliding parallel to the optical axis inside this intermediate component, which contains a slit (64-63) for this purpose, this intermediate component resting on surfaces (25-26) of the polar components of the magnetic circuit parallel to the medium for quick radial sliding, the optical head (50) being fixed to the plate, and by the fact that clearance is provided between the plate (11-12) and the edges of the slit (64-63) in the intermediate component (60), to permit following and track jumps, this plate further comprising the second electric circuit comprising conductors parallel to the optical axis and placed in the magnetic field (45-46).

7. A device as defined in claim 6, characterized by the fact that conductors parallel to the optical axis (43-44) are placed on the intermediate component (60) in the magnetic field, to create the fast radial forward movement force.

8. A device as defined in any one or other of claims 6 or 7, characterized by the fact that the optical head comprises an integrated radiation source (54).

9. An optical system comprising an optically recordable or readable medium (1) and a device (50-60-70) as defined in any one or other of claims 1 to 8, characterized by the fact that it comprises a focussing control loop (90-100-120) controlling the current circulating in the first electric circuit (3) to control focussing, and a radial control loop (90-130), controlling current in the second electric circuit (4), for radial track checking and track jumps.

10. An optical system as defined in claim 9, characterized by the fact that it further comprises a rapid forward radial movement control device (140) acting on the mobile assembly.

11. An optical system as defined in claim 10, characterized by the fact that the current circulating in the first electric circuit (3) is formed of a variable direct component corresponding to the mean position of the focussing spot and of an alternating component allowing the spot to be wobbulated round this mean position.

**Ansprüche**

1. Einführungsvorrichtung zu einer auf einem Träger (1) sich befindenden Spur, welche optisch durch eine fokussierte Lichtstrahlung registriert oder gelesen werden kann, wobei diese Spur im gleichmässigen Abstand sich befindende Rillen aufweist, mit einem magnetischen Kreis (2), der mit mindestens einem Spalt (100) versehen ist, in welchem bewegte Teile (60-70) sich bewegen, welche mindestens einen ersten Stromkreis (3) aufweisen, der mit einem optischen Kopf (50) fest verbunden ist, dessen optische Achse senkrecht auf der Ebene des Trägers (1) steht, und der die Aufrechterhaltung der Fokussierung dieses Kopfes auf der Spur gewährleistet, und welche einen zweiten Stromkreis (4) aufweisen, der die Verfolgung der Spur in der Ebene des Trägers gewährleistet, dadurch gekennzeichnet, dass der magnetische Kreis fest ist, dass jeder Spalt (100) eine Ebene bilden, welche ungefähr senkrecht auf dem Träger der Spur steht und alle Rillen kreuzt, dass genannter erster Stromkreis (3) mindestens einen aktiven Teil aufweist, welcher aus Leitern (3) besteht, welche parallel zu genanntem Träger (1) sind und in der Ebene des Spaltes (100) liegen, um, wenn der Kreis von einem Strom ($i_1$) durchflossen wird, eine Kraft ($F_1$) zu entwickeln, welche längs der optischen Achse des Kopfes (50) gerichtet ist und welche die Bewegung der bewegten Teile (11-12) ermöglicht, um genannte Fokussierung zu erhalten, dass genannter zweiter Stromkreis (4) mindestens einen aktiven Teil aufweist, welcher aus Leitern besteht, die senkrecht zu den Leitern genannten ersten Stromkreises (3) liegen und die im magnetischen Feld liegen, um, wenn der Kreis von einem Strom ($i_2$) durchflossen wird, eine Kraft ($F_2$) zu entwickeln, welche in der Ebene des Trägers senkrecht zu den Spuren ausgerichtet ist, welche die Bewegung der bewegten Teile (11-12) ermöglicht, um genannte Verfolgung zu gewährleisten und welche weiter einen Vorschub um einen Spurschritt für die Ausführung eines Spursprungs gewährleistet und dass sie zusätzliche Mittel (150 oder 43-44) aufweist, welche auf die bewegten Teile eine Kraft ausübt, die in der Ebene des Trägers senkrecht zu den Spuren ausgerichtet ist, um eine Schnell-Verstellung der bewegten Teile (11-12) zu gewährleisten, um diese bewegten Teile über einer beliebigen genannter Rillen zu verstellen und zu positionieren.

2. Vorrichtung nach Anspruch 1, dadurch gekennzeichnet, dass der Träger (1) plattenförmig ist und die Spur eine Spirale oder konzentrische Kreise bildet, und dass der Spalt (100) in radialer Richtung der Platte sich ausdehnt.

3. Vorrichtung nach Anspruch 1 oder 2, dadurch gekennzeichnet, dass der magnetische Kreis aus nebeneinander liegenden Elektro-Magneten (24) gebildet ist, dessen Spalte auf einer Geraden in radialer Richtung liegen, wobei diese Elektro-Magneten nach und nach, die Versetzung der bewegten Teile folgend, gespeist werden, damit nur der aktive Teil der Radialen Versetzungs-Stromkreise (3, 4) in einem effektiven magnetischen Feld liegen.

4. Vorrichtung nach Anspruch 1 bis 3, dadurch gekennzeichnet, dass die Mittel zur Schnell-Verstellung aus einem Linear-Motor (150) bestehen.

5. Vorrichtung nach Anspruch 1 oder 2, dadurch gekennzeichnet, dass die Mittel zur Schnell-Verstellung aus einem dritten Stromkreis (43-44) bestehen, dessen Leiterteile, die zur optischen Achse parallel sind, im Spalt liegen.

6. Vorrichtung nach den vorherigen Ansprüchen, dadurch gekennzeichnet, dass die bewegten Teile zusätzlich ein Zwischenteil (60) aufweisen, wobei der erste Stromkreis (30) an eine Plakette (11-12) befestigt ist, welche parallel zur optischen Achse in diesem einen zu diesem Zweck vorgesehenen Spalt (64-63) aufweisenden Zwischenteil gleitet, wobei dieses Zwischenteil auf Seiten (25-26) der Polteile des zum Träger parallelen magnetischen Kreises für das radiale Schnell-Gleiten liegt, wobei der optische Kopf (50) an der Plakette befestigt ist und dass ein Spiel zwischen der Plakette (11-12) und die Ränder des Spaltes (64-63) des Zwischenteiles (60) vorgesehen ist, um die Verfolgung und die Spursprünge zu ermöglichen, wobei die Plakette weiter einen zweiten Stromkreis trägt, welcher zur optischen Achse parallele und in einem Magnetfeld liegende Leiter (45-46) aufweist.

7. Vorrichtung nach Anspruch 6, dadurch gekennzeichnet, dass zur optischen Achse parallele Leiter (43, 44) auf dem Zwischenteil (60) im Magnetfeld liegen, um die radiale Schnellverstellungskraft zu erzeugen.

8. Vorrichtung nach Ansprüche 6 und 7, dadurch gekennzeichnet, dass der optische Kopf eine eingebaute Lichtquelle (54) aufweist.

9. Optisches System, welches einen optisch speicherbaren und lesbaren Träger (1) aufweist, und Vorrichtung (50-60-70) nach Anspruch 1 bis 8, dadurch gekennzeichnet, dass es eine Fokussierungs-Regelschleife (90-110-120) aufweist, welche den im ersten Kreis (3) laufenden Strom zur Fokussierungs-Steuerung steuert und dass es eine radiale Regelschlaufe (90-130) aufweist, welche den Strom des zweiten Kreises (4) zur radialen Verfolgung und für die Spursprünge steuert.

10. Optisches System nach Anspruch 9, dadurch gekennzeichnet, dass es zusätzlich eine Vorrichtung (150) zur radialen Schnell-Verstellung aufweist, welches auf die bewegten Teile wirkt.

11. Optisches System nach Anspruch 9, dadurch gekennzeichnet, dass der im ersten Kreis (3) strömende Strom gebildet ist aus einer veränderlichen Gleichstromkomponente, welche der mittleren Lage des Fokussierungs-Lichtpunkten entspricht, und aus einer Wechselstromkomponente, welche es ermöglicht, ein Wobbeln des Lichtpunkten um seine mittlere Lage auszuführen.

Fig. 1

Fig. 2

Fig. 3

Fig. 4

Fig. 5

Fig. 6

Fig. 7

Fig. 10

Fig. 11

Fig. 8

4

Fig. 9

Fig. 12